# EUROPEAN PATENT SPECIFICATION

(11) **EP 1 796 191 B1**
(45) Date of publication and mention of the grant of the patent: **22.10.2014**
(21) Application number: 06009694.8
(22) Date of filing: 10.05.2006
(51) Int. Cl.: C01G 45/12, H01M 4/86, H01M 4/90

(54) **An improved process for the manufacture of strontium doped lanthanum manganite (LSM) ceramic powder suitable for solid oxide fuel cell (SOFC) applications**
Verbessertes Verfahren zur Herstellung von mit Lanthan Manganat dopiertem Strontium (LSM) keramischem Puder geeignet für Brennstofftzellen Anwendungen
Procédé pour la préparation de poudre céramiquede à base de manganite de lanthane dopé au srontium (LSM) appropriée pour des applications de pîles à combustible

(30) Priority: 06.12.2005 IN DE32772005
(43) Date of publication of application: 13.06.2007
(73) Proprietor: Council of Scientific and Industrial Research, New Delhi 110 001 (IN)
(72) Inventor: Udayakumar, Andi, Kodihalli Bangalore- 560 017 (IN)
(74) Representative: Grünecker, Kinkeldey, Stockmair & Schwanhäusser

(56) References cited:
- WO-A-2004/013882
- BAO ET AL: "Synthesis and electrochemical properties of LiAl0.1Mn1.9O4 by microwave-assisted sol-gel method" JOURNAL OF POWER SOURCES, ELSEVIER, AMSTERDAM, NL, vol. 154, no. 1, 9 March 2006 (2006-03-09), pages 239-245, XP005309993 ISSN: 0378-7753
- BAO ET AL: "Synthesis and electrochemical properties of LiMn2O4 by microwave-assisted sol-gel method" MATERIALS LETTERS, NORTH HOLLAND PUBLISHING COMPANY. AMSTERDAM, NL, vol. 59, no. 28, December 2005 (2005-12), pages 3761-3765, XP005095251 ISSN: 0167-577X
- RAO K J ET AL: "SYNTHESIS OF INORGANIC SOLIDS USING MICROWAVES" CHEMISTRY OF MATERIALS, AMERICAN CHEMICAL SOCIETY, WASHINGTON, US, vol. 11, no. 4, April 1999 (1999-04), pages 882-895, XP000827470 ISSN: 0897-4756
- GNANASEKAR K I ET AL: "Nanocrystalline bulk and thin films of La1-xSrxMnO3 (0=<x=<0.3)" SOLID STATE IONICS, NORTH HOLLAND PUB. COMPANY. AMSTERDAM, NL, vol. 148, no. 3-4, 2 June 2002 (2002-06-02), pages 575-581, XP004361864 ISSN: 0167-2738
- PATENT ABSTRACTS OF JAPAN vol. 016, no. 431 (C-0983), 9 September 1992 (1992-09-09) & JP 04 149024 A (CENTRAL RES INST OF ELECTRIC POWER IND), 22 May 1992 (1992-05-22)
- OUNAIES Z: "MICROWAVE CALCINATION OF CONVENTIONALLY AND SOL-GEL PREPARED LEAD ZIRCONATE TITANATE" MATERIALS LETTERS, NORTH HOLLAND PUBLISHING COMPANY. AMSTERDAM, NL, vol. 17, no. 1 / 2, 1 July 1993 (1993-07-01), pages 13-20, XP000385045 ISSN: 0167-577X

## Description

The present invention relates to an improved process for the manufacture of strontium doped lanthanum manganite (LSM) ceramic powder suitable for solid oxide fuel cell (SOFC) applications.

Strontium doped lanthanum manganite (LSM), La₁₋ₓ Srₓ Mn O₃ (0 < x ≤ 0.5) is one of the candidate materials used as a cathode for high temperature SOFC applications, because of its properties such as chemical stability, electrical conductivity, high catalytic activity for oxygen. The performance of SOFCs is often limited by cathode reactions. For applications in SOFCs, cathode tube is manufactured by extrusion process from the synthesized LSM powder.

Prior art search was made in the patent databases and some patents close to the field of the present invention are discussed below along with their drawbacks.

Reference may be made to patent nos.: WO2004013882, US2003027033 and JP4149024, wherein the solid-state reaction method was used for preparing LSM powder.

In patent no.: WO2004013882 and US2003027033 is described a method of making ceramic electrode materials comprising intimate mixtures of two or more components, including at least one nanoscale ionically conducting ceramic electrolyte material (e.g., yttrium-stabilized zirconia, gadolinium-doped ceria, samarium-doped ceria, etc.) and at least one powder of an electrode material, which may be an electrically conducting ceramic electrode material (e.g., lanthanum strontium manganite, praseodymium strontium manganese iron oxide, lanthanum strontium ferrite, lanthanum strontium cobalt ferrite, etc.) or a precursor of a metallic electrode material (e.g., nickel oxide, copper oxide, etc.). The invention also includes anode and cathode coatings and substrates for solid oxide fuel cells prepared by this method.

In patent no.: JP4149024 titled: strontium-doped lanthanum manganite and solid electrolyte fuel cell using the same, is disclosed how to prevent the breakage of an air electrode and to improve its chemical stability by sintering a strontium-doped lanthanum manganite powder having a specified composition and using the sintered body for the air electrode. La₂O₃, SrCO₃ and Mn₂O₃ are mixed in a desired molar ratio, and the mixture is calcined to produce a strontium-doped lanthanum manganite powder having the composition shown by the formula (0<x<0.2 and 0.025<y<0.75 or 0.2<=x<0.4 and 0.025<y<0.05). The strontium-doped lanthanum manganite powder is then sintered, and the sintered body is used for an air electrode. The air electrode and a fuel electrode are formed on the front and rear of a solid electrolyte to obtain a cell. The cell and a separator are alternately laminated with spacers and in between to obtain an air supply space and a combustion gas supply space, and a combustion gas supply pipe and an air supply pipe are provided to the spaces and to constitute a solid electrolyte fuel cell.

The main drawbacks of the solid-state reaction method for preparing strontium doped lanthanum manganite (LSM) powder are less chemical homogeneity and high chances of contamination of the product. Also this method takes more synthesis time of 70-80 hours along with long duration of calcination.

Reference may be made to K. I. Gnanasekar, Xin Jiang, J. C. Jiang, Mher Aghasyan, R. Tiltsworth, J. Hormes and B. Rambabu, "Nanocrystalline bulk and thin films of La1-x Srx Mn O3 (0 ≤ x ≤ 0.3)", Solid State Ionics, 148 (2002) 575-581, which uses a conventional sol-gel process for the synthesis of LSM. The main drawback of the conventional sol-gel process is that the time taken for the formation of LSM and dehydration of gel are as high as 40-50 hours.

Reference may be made to J. A. M. van Roosmalen, E. H. P. Cordfunke and J. P. P. Huijsmans, "Sinter behaviour of (La,Sr) MnO3", Solid State Ionics, 66 (1993) 285-293, wherein a co-precipitation method was used for the synthesis of LSM. The main drawback of this method is that the yield is low and the synthesis takes around 70-80 hours.

As referred and described herein above, presently, stoichiometrically stable strontium doped lanthanum manganite (LSM) ceramic powder is synthesized by many routes such as sol-gel synthesis, solid-state reaction, co-precipitation. The solid-state reaction route has disadvantages like long processing duration of 70-80 hours, poor chemical homogeneity and large grain size of finished product, use of high temperature for processing, lack of control on the stoichiometry of product. The solution routes like precipitation / co-precipitation gives high quality product but yield obtained is low and also these processes are time consuming taking 70-80 hours for synthesis of product.

From hitherto known prior art for synthesis of LSM, it is seen that the existing methods require long processing duration and high temperature for processing. Final product obtained has problems such as lack of chemical homogeneity, large grain size of product, lack of control on the stoichiometry.

gel method are disclosed in J. Power Sources 154, 239 (2006). Synthesis and electrochemical properties of LiMn₂O₄ by microwave-assisted sol-gel method are disclosed in Mat. Lett. 59, 3761 (2005). The synthesis of inorganic solids such as carbides, nitrides, complex oxides, silicides, zeolites and apatite by using microwave is disclosed in Chem. Mater. 11, 882 (1999). Nanocrystalline bulk and thin films of La₁₋ₓSrₓMnO₃ (0 ≤ x ≤ 0.3) is disclosed in Solid State Ionics 148, 575 (2002). Microwave calcination of conventionally and sol gel prepared lead zirconate titanate is disclosed in Mat. Lett. 17, 13 (1993). Nanocomposite electrodes and a method of making the same are disclosed in WO 2004/013882.

From the details and drawbacks of the hitherto known processes, it is clear that there is a definite need and scope for improvement in synthesis of LSM ceramic powder.

The main object of the present invention is to provide an improved process for the manufacture of strontium doped lanthanum manganite (LSM) ceramic powder suitable for solid oxide fuel cell (SOFC) applications, which obviates the drawbacks of the hitherto known prior art.

Another object of the present invention is to obtain homogeneous and highly pure product at lower processing temperatures.

Yet another object of the present invention is to enhance the rate of reaction and dehydration during synthesis of LSM powder.

Still yet another object of the present invention is to provide a process for synthesis of LSM powder in a cost-effective manner.

In the present invention, the process involves microwave-assisted sol-gel for the synthesis of LSM powder in which the constituent raw materials are added into distilled water to form a sol, from which a gel is obtained. Further this gel is dehydrated by heating in a microwave oven, followed by calcination and grinding to get the LSM powder. Use of microwave energy for dehydration of gel reduces the processing time significantly, resulting in good quality LSM powder. High purity and good homogeneity of the final product are ensured in the process of the present invention even at lower processing temperatures.

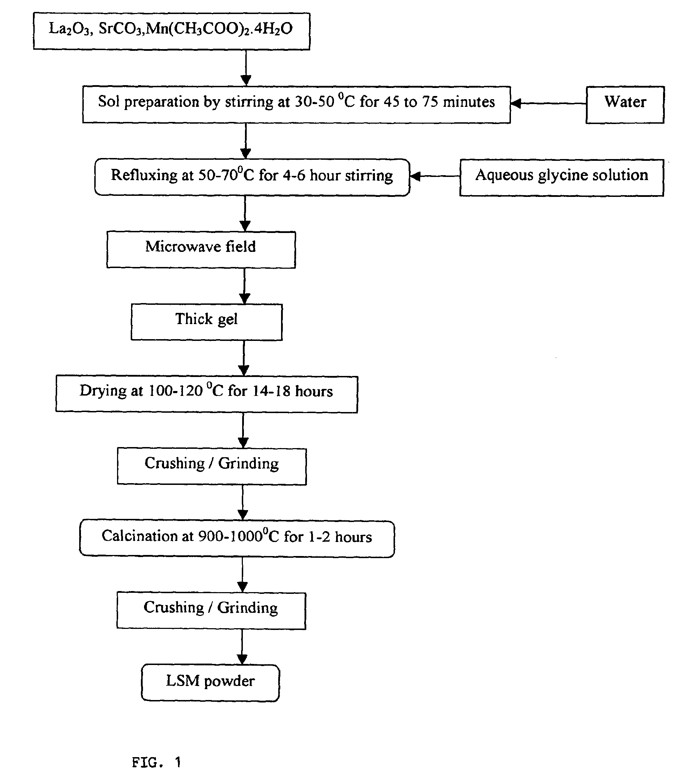

In figure 1 of the drawings accompanying this specification is shown the flowchart for the manufacture of LSM ceramic powder by the improved process of the present invention.

Accordingly, the present invention provides an improved process for the manufacture of strontium doped lanthanum manganite (LSM), La₁₋ₓ Srₓ Mn O₃ (0 < x ≤ 0.5) ceramic powder suitable for solid oxide fuel cell (SOFC) applications, which comprises preparation of sol by dissolving stoichiometric amount of precursors of lanthanum oxide (La₂O₃), strontium carbonate (SrCO₃) and manganese acetate tetra hydrate (Mn (CH₃COO)₂.4H₂O) in doubly distilled water, refluxing of said sol in the presence of aqueous glycine solution as catalyst, to obtain a gel form of product; characterized in that the resultant gel being subjected to microwave dehydration in a microwave oven for a period in the range of 1 to 5 hours, further drying the dehydrated gel, if required, in a drying oven; crushing and grinding the dried gel, followed by calcination and grinding of calcined gel product to obtain fine strontium doped lanthanum manganite (LSM) powder.

In an embodiment of the present invention, the precursors added to doubly distilled water are in any stoichiometric ratio to obtain La₁₋ₓ Srₓ Mn O₃, such that x is in the range of : 0 < x ≤ 0.5.

In another embodiment of the present invention, the precursors used to prepare an aqueous sol can also be such as (i) Nitrate salts of La, Sr and Mn and (ii) La(OH)₃, SrCO₃ and Mn CO₃.

In yet another embodiment of the present invention, addition of precursors to doubly distilled water is carried out at a temperature in the range of 30°C to 50°C under constant stirring for a period in the range of 45 to 75 minutes.

In still another embodiment of the present invention, refluxing of sol is carried out by adding 16 to 24 ml aqueous glycine solution, per 1000 g of raw materials, to sol at a temperature in the range of 50°C to 70°C under constant stirring for a period of 4 to 6 hours.

In still yet another embodiment of the present invention, aqueous glycine solution added during refluxing step is of concentration in the range of 0.5% to 5% by weight.

In a further embodiment of the present invention, the microwave energy used for the dehydration of gel is of the order of 0.5 to 1.5 kW and the frequency is 2.45 GHz.

In a yet further embodiment of the present invention, oven drying of the microwave-dried gel, if required, is carried out at a temperature between 100°C and 120°C for 14 to 18 hours.

In a still further embodiment of the present invention, calcination of the dried gel is carried out at temperature between 900°C and 1000°C for 1 to 2 hours.

The improved process of the present invention for the manufacture of LSM powder is explained with following description, as shown in the flow chart given in figure 1 of the drawings.

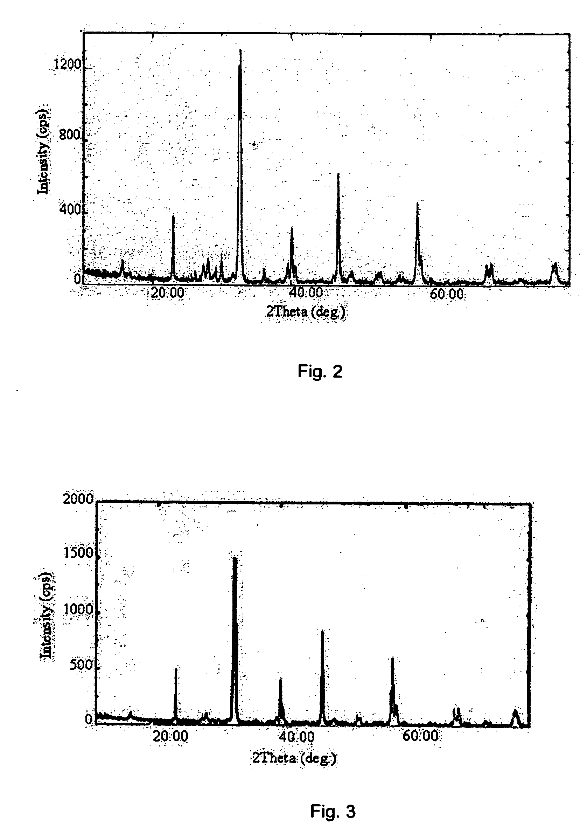

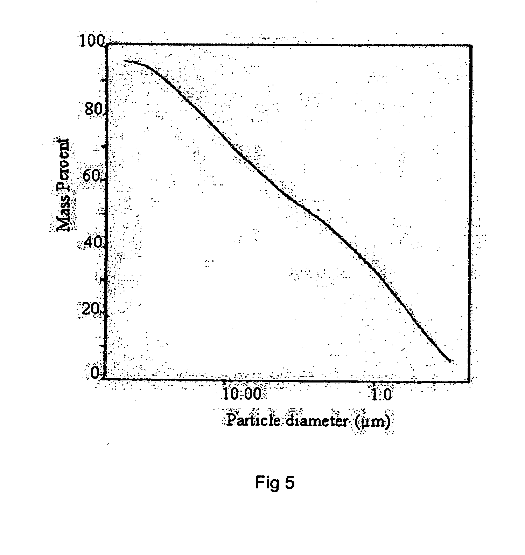

The precursors lanthanum oxide (La₂O₃), strontium carbonate (SrCO₃) and manganese acetate tetra hydrate (Mn(CH₃COO)₂.4H₂O) are taken in stoichiometric ratio and dissolved in doubly distilled water, and the solution is constantly stirred for 45 to 75 minutes at 30 to 50°C. This operation results in the formation of a sol. The sol is transferred to a refluxing unit and is refluxed at 50 to 70°C for 4 to 6 hours. Stirring is necessary during reflux to maintain the homogeneity of the sol. During reflux, around 16 to 24 ml of 0.5% to 5% (by weight) of aqueous glycine solution per 1000 g of raw materials is added to the sol, which acts as a catalyst. By the end of reflux, the sol turns into a gel. The resultant gel is subjected to microwave energy by keeping it in a microwave oven having an output of 0.5 to 1.5 kW and frequency of 2.45 GHz, for a period of 1 to 5 hours so that the gel turns into a highly viscous mass. Microwave heating helps to dehydrate the gel, thereby reducing the processing time considerably. Further, the viscous mass obtained from microwave dehydrated gel product is oven dried, if required, at 100 to 120°C for 14 to 18 hours. The dried gel is ground well and is calcined at 900 to 1000°C for 1 to 2 hours for the perovskite phase of the ceramic product to be formed. This is clear from the X-ray Diffraction (XRD) pattern of LSM powder, as depicted in figures 2, 3, 4 and 8 of the drawings, matching with the standards given by the Joint Council for Powder Diffraction Studies (JCPDS) file No. 40-1100 indicating the phase purity of LSM powder. The grinding before calcining helps for uniform calcination throughout the sample and helps in breaking the lumps after calcining. To get the fine LSM ceramic powder, again grinding of the calcined product has to be done and is characterized by X-ray sedimentation technique to determine the particle size distribution. Figures 5, 6, 7 and 9 show the particle size distribution (PSD) of LSM powder determined by X-ray sedimentation technique.

The LSM powder of present invention synthesized by using microwave assisted sol-gel processing route is stoichiometrically well controlled, highly pure and particle size is in the range which is suitable for Solid Oxide Fuel Cell (SOFC) applications. The process of the present invention takes synthesis time of 15 to 30 hours for the manufacture of LSM powder. In the hitherto known prior art the conventional sol-gel process takes around 40 to 50 hours, and solid-state reaction and co-precipitation takes around 70 to 80 hours each. The present invention thus achieves a substantial reduction, of the order of 20 to 55 hours, in processing time due to the non-obvious inventive step of subjecting the resultant gel to microwave dehydration by the introduction of microwave field for a period in the range of 1 to 5 hours.

The novelty of the present invention lies mainly in fast synthesis and in obtaining highly pure, stoichiometrically well-controlled LSM powder at lower processing temperatures. The novelty has been realized by the non-obvious inventive step of microwave dehydration of gel.

The novel features of the present invention have been achieved by introducing the non-obvious inventive step of using microwave energy for enhancing the dehydration of gel, so that the processing time is reduced by 20 to 55 hours, without any degradation in homogeneity, stoichiometry and purity of the LSM product. Use of microwave energy for heating of gel in present invention reduces the processing time significantly.

The following examples are given by way of illustrations and therefore should not be construed to limit the scope of the present invention.

### Example 1

Powders of La₂O₃, SrCO₃ and Mn (CH₃COO)₂.4H₂O taken in the weight ratio 33.7:5.8:60.4 respectively were added to doubly distilled water and heated to 30°C with stirring for 75 minutes. The resulting sol was then transferred to the refluxing unit, followed by the addition of 16 ml of 5% (by weight) aqueous glycine solution per 1000 g of total raw materials. The sol was then refluxed at 50°C for 6 hours. The resulting gel was then transferred to the microwave oven having an output of 0.65 kW and frequency of 2.45 GHz, and microwave energy was introduced for 2 hours, as a result of which the gel turned into a highly viscous mass. The viscous mass was then transferred to the drying oven and dried at 100°C for 18 hours. The dried gel was then ground well and calcined at 900°C for 2 hours, followed by grinding again to get the fine LSM powder La_{0.84}Sr_{0.16}MnO₃. The well-defined peaks in the XRD pattern as shown in Fig. 2 reveals the phase purity of LSM powder. The particle size shows a distribution from 0.3µm to 50µm with a mean particle size D₅₀ of 2.5 µm as shown in Fig. 5. The total time taken for the manufacture of LSM powder was 29 hours, which is less by 11 to 21 hours when compared to the conventional sol-gel method and by 41 to 51 hours compared to solid state reaction and co-precipitation.

### Example 2

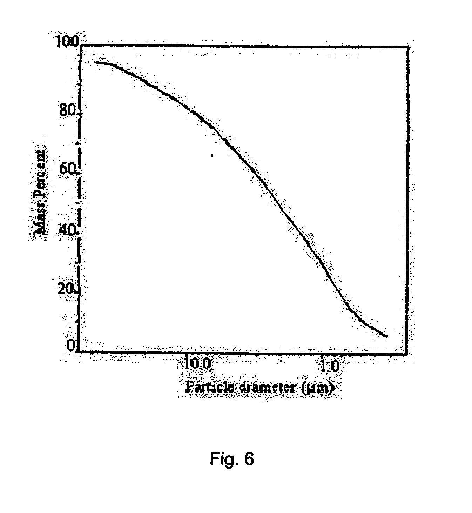

Powders of La₂O₃, SrCO₃ and Mn (CH₃COO)₂.4H₂O taken in the weight ratio 33.7:5.8:60.4 respectively were added to doubly distilled water and heated to 40°C with stirring for 60 minutes. The resulting sol was then transferred to the refluxing unit, followed by the addition of 20 ml of 5% (by weight) aqueous glycine solution per 1000 g of total raw materials. The sol was then refluxed at 60°C for 5 hours. The resulting gel was then transferred to the microwave oven having an output of 0.65 kW and frequency of 2.45 GHz, and microwave energy was introduced for 2.5 hours, as a result of which the gel turned into a highly viscous mass. The viscous mass was then transferred to the drying oven and dried at 110°C for 16 hours. The dried gel was then ground well and calcined at 950°C for 1.5 hours, followed by grinding again to get the fine LSM powder La_{0.84}Sr_{0.16}MnO₃. The well-defined peaks in the XRD pattern as shown in Fig. 3 reveals the phase purity of LSM powder. The particle size shows a distribution from 0.3µm to 50µm with a mean particle size D₅₀ of 2 µm as shown in Fig. 6. The total time taken for the manufacture of LSM powder was 26 hours, which is less by 14 to 24 hours when compared to the conventional sol-gel method and by 44 to 54 hours compared to solid state reaction and co-precipitation.

### Example 3

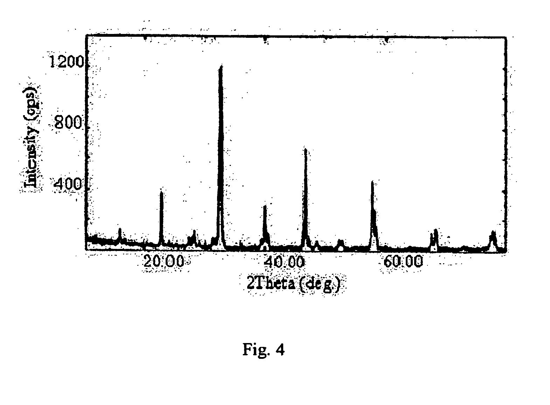

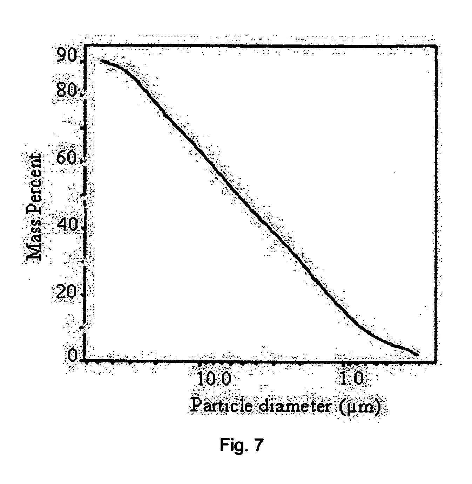

Powders of La₂O₃, SrCO₃ and Mn (CH₃COO)₂.4H₂O taken in the weight ratio 33.7:5.8:60.4 respectively were added to doubly distilled water and heated to 50°C with stirring for 45 minutes. The resulting sol was then transferred to the refluxing unit, followed by the addition of 24 ml of 5% (by weight) aqueous glycine solution per 1000 g of total raw materials. The sol was then refluxed at 70°C for 4 hours. The resulting gel was then transferred to the microwave oven having an output of 0.65 kW and frequency of 2.45 GHz, and microwave energy was introduced for 3 hours, as a result of which the gel turned into a highly viscous mass. The viscous mass was then transferred to the drying oven and dried at 120°C for 14 hours. The dried gel was then ground well and calcined at 1000°C for 1 hour, followed by grinding again to get the fine LSM powder La_{0.84}Sr_{0.16}MnO₃. The well-defined peaks in the XRD pattern as shown in Fig. 4 reveals the phase purity of LSM powder. The particle size shows a distribution from 0.3µm to 50µm with a mean particle size D₅₀ of 5.4µm as shown in Fig. 7. The total time taken for the manufacture of LSM powder was 23 hours, which is less by 17 to 27 hours when compared to the conventional sol-gel method, and by 47 to 57 hours compared to solid state reaction and co-precipitation.

### Example 4

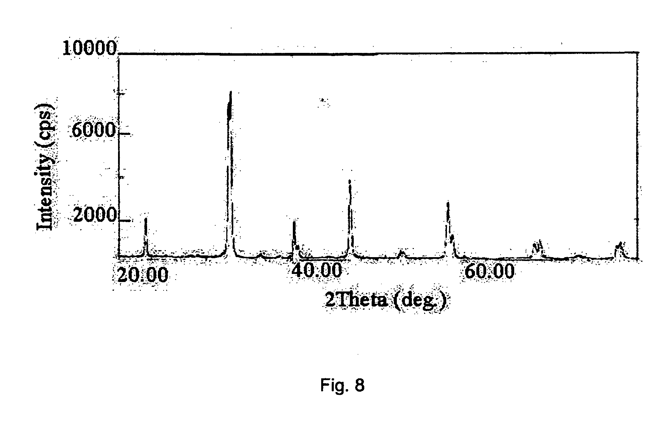

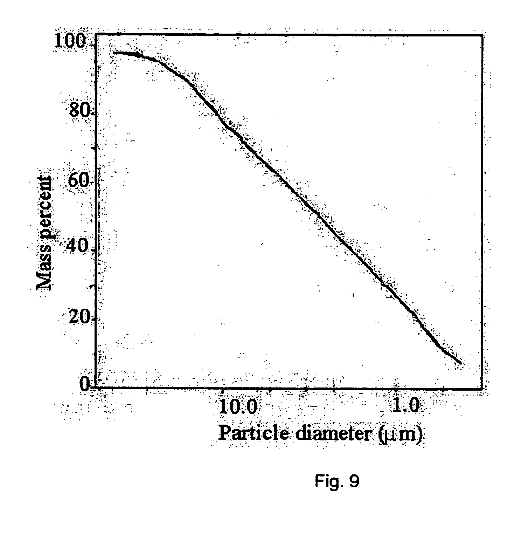

Powders of La₂O₃, SrCO₃ and Mn (CH₃COO)₂.4H₂O taken in the weight ratio 33.7:5.8:60.4 respectively were added to doubly distilled water and heated to 40°C with stirring for 60 minutes. The resulting sol was then transferred to the refluxing unit, followed by the addition of 20 ml of 0.5% (by weight) aqueous glycine solution per 1000 g of total raw materials. The sol was then refluxed at 60°C for 6 hours. The resulting gel was then transferred to the microwave oven having an output of 0.75 kW and frequency of 2.45 GHz, and microwave energy was introduced for 5 hours, as a result of which the gel dehydrated completely in the microwave oven itself. The dried gel was then ground well and calcined at 1000°C for 1 hour, followed by grinding again to get the fine LSM powder La_{0.84}Sr_{0.16}MnO₃. The well-defined peaks in the XRD pattern as shown in Fig. 8 reveals the phase purity of LSM powder. The particle size shows a distribution from 0.3µm to 50µm with a mean particle size D₅₀ of 2.5 µm as shown in Fig. 9. The total time taken for the manufacture of LSM powder was 15 hours, which is less by 25 to 35 hours when compared to the conventional sol-gel method, and by 55 to 65 hours compared to solid state reaction and co-precipitation.

In the present invention, there is provided an improved process for manufacture of strontium doped lanthanum manganite (LSM) ceramic powder suitable for solid oxide fuel cell (SOFC) applications. In the hitherto known prior art LSM ceramic powder is synthesized by many routes, such as solid-state reaction, precipitation / co-precipitation, sol-gel synthesis. The solid-state reaction route has disadvantages like long processing duration, poor chemical homogeneity, large grain size of product, use of high temperature for processing and lack of control on the stoichiometry of product. The solution routes like precipitation / co-precipitation gives high quality product but yield obtained is low and also these processes are time consuming taking 70 to 80 hours for synthesis of product. Present invention has established the process for the manufacture of highly pure and fine strontium doped lanthanum manganite ceramic powder (La₁₋ₓ Srₓ MnO₃, where x is in the range of : 0 < x ≤ 0.5) by combining microwave energy with sol-gel technique using lanthanum oxide, strontium carbonate and manganese acetate tetra hydrate as precursors. Synthesized powder is calcined at 900 to 1000°C to obtain the perovskite phase of the ceramic product. Product is confirmed by X-ray diffraction studies. Particle size distribution as determined by X-ray sedimentation technique is in the range of 0.3µm to 50µm, which is suitable for solid oxide fuel cell (SOFC) applications. Novelty of the present invention lies mainly in faster synthesis to obtain stoichiometrically well-controlled LSM ceramic powder at lower processing temperatures. The novelty has been realized by the non-obvious inventive step of microwave dehydration of gel.

A comparison of manufacture of strontium doped lanthanum manganite (LSM) ceramic powder suitable for solid oxide fuel cell (SOFC) applications by the present invention with existing methods, specially in respect of time taken in hours for synthesis, chances of Contamination and average Particle size (D₅₀) is shown in table-1 below.

**Table 1 Comparison of the present invention with existing methods.**

| LSM synthesis method | Time taken for synthesis (hours) | Chances of Contamination | Average Particle size (D₅₀) |
|---|---|---|---|
| Present Invention | 15-30 | Less | 1-5 µm |
| Conventional sol-gel | 40-50 | Less | 1-5 µm |
| Solid state reaction | 70-80 | High | >10 µm |
| Co-precipitation | 70-80 | Less | 1-5 µm |

The main advantages of the improved process of the present invention are:
1. The product obtained is stoichiometrically well controlled.
2. The product obtained is highly pure. High phase purity as determined by the well-defined peaks in the XRD pattern.
3. The product obtained is homogeneous LSM powder having particle size between 0.3µm to 50µm, suitable for SOFC applications.
4. The processing temperatures involved are low.
5. The processing time is significantly reduced by 20 to 25 hours when compared to the conventional sol-gel process and by 50 to 55 hours compared to solid state reaction and co-precipitation.
6. The process is economical and cost-effective compared to the conventional methods.
7. Minimum infrastructure required.

## Claims

1. An improved process for the manufacture of strontium doped lanthanum manganite (LSM), La₁₋ₓ Srₓ Mn O₃ (0 < x ≤ 0.5) ceramic powder suitable for solid oxide fuel cell (SOFC) applications, which comprises preparation of sol by dissolving stoichiometric amount of precursors of lanthanum oxide (La₂O₃), strontium carbonate (SrCO₃) and manganese acetate tetra hydrate (Mn (CH₃COO)₂·4H₂O) in doubly distilled water, refluxing of said sol in the presence of aqueous glycine solution as catalyst, to obtain a gel form of product; **characterized in that** the resultant gel being subjected to microwave dehydration in a microwave oven for a period in the range of 1 to 5 hours, further drying the dehydrated gel, if required, in a drying oven; crushing and grinding the dried gel, followed by calcination and grinding of calcined gel product to obtain fine strontium doped lanthanum manganite (LSM) powder.

2. An improved process as claimed in claim 1 wherein, the precursors added to doubly distilled water are in any stoichiometric ratio to obtain La₁₋ₓ Srₓ Mn O₃, such that x is in the range of : 0 < x ≤ 0.5.

3. An improved process as claimed in claim 1-2 wherein, the precursors used to prepare an aqueous sol can also be such as (i) Nitrate salts of La, Sr and Mn and (ii) La(OH)₃, SrCO₃ and Mn CO₃.

4. An improved process as claimed in claims 1-3 wherein, addition of precursors to doubly distilled water is carried out at a temperature in the range of 30°C to 50°C under constant stirring for a period in the range of 45 to 75 minutes.

5. An improved process as claimed in claims 1 to 4 wherein, refluxing of sol is carried out by adding 16 to 24 ml aqueous glycine solution, per 1000 g of raw materials, to sol at a temperature in the range of 50°C to 70°C under constant stirring for a period of 4 to 6 hours.

6. An improved process as claimed in claims 1 to 5 wherein, aqueous glycine solution added during refluxing step is of concentration in the range of 0.5% to 5% by weight.

7. An improved process as claimed in claims 1 to 6 wherein, the microwave energy used for the dehydration of gel is of the order of 0.5 to 1.5 kW and the frequency is 2.45 GHz.

8. An improved process as claimed in claims 1 to 7 wherein, oven drying of the microwave-dried gel, if required, is carried out at temperature between 100°C and 120°C for 14 to 18 hours.

9. An improved process as claimed in claims 1 to 8 wherein, calcination of the dried gel is carried out at temperature between 900°C and 1000°C for 1 to 2 hours.

## Patentansprüche

1. Verbessertes Verfahren zur Herstellung von Strontium-dotiertem Lanthanmanganit (LSM)-, La₁₋ₓSrₓMnO₃ (0 < x ≤ 0,5), -Keramikpulver, das für Festoxidbrennstoffzellen (SOFC)-Anwendungen geeignet ist, welches umfasst: die Herstellung von Sol durch Auflösen einer stöchiometrischen Menge der Vorstufen Lanthanoxid (La₂O₃), Strontiumcarbonat (SrCO₃) und Manganacetat-Tetrahydrat (Mn(CH₃COO)₂·4H₂O) in zweifach destilliertem Wasser, Erwärmen unter Rückfluss (refluxing) des Sols in Gegenwart einer wässrigen Glycinlösung als Katalysator, um eine Gel-Form des Produkts zu erhalten; **dadurch gekennzeichnet, dass** das erhaltene Gel einer Mikrowellen-Dehydratisierung in einem Mikrowellenofen für einen Zeitraum im Bereich von 1 bis 5 Stunden unterzogen wird, ferner Trocknen des dehydratisierten Gels, falls erforderlich, in einem Trockenofen; Brechen und Mahlen des getrockneten Gels, gefolgt von Kalzinieren und Mahlen des kalzinierten Gel-Produkts, um feines Strontium-dotiertes Lanthanmanganitpulver (LSM) zu erhalten.

2. Verbessertes Verfahren nach Anspruch 1, wobei die zum zweifach destillierten Wasser zugesetzten Vorstufen in irgendeinem stöchiometrischen Verhältnis vorliegen, um La₁₋ₓSrₓMnO₃ zu erhalten, so dass x im Bereich von 0 < x ≤ 0,5 liegt.

3. Verbessertes Verfahren nach Anspruch 1-2, wobei die zur Herstellung eines wässrigen Sols verwendeten Vorstufen auch zum Beispiel (i) Nitratsalze von La, Sr und Mn, und (ii) La(OH)₃, SrCO₃ und MnCO₃ sein können.

4. Verbessertes Verfahren nach den Ansprüchen 1-3, wobei die Zugabe von Vorstufen zu zweifach destilliertem Wasser bei einer Temperatur im Bereich von 30°C bis 50°C unter konstantem Rühren während eines Zeitraums im Bereich von 45 bis 75 Minuten durchgeführt wird.

5. Verbessertes Verfahren nach den Ansprüchen 1 bis 4, wobei ein Erwärmen unter Rückfluss des Sols durch Zugabe von 16 bis 24 ml wässriger Glycinlösung, pro 1000 g Rohmaterial, zu dem Sol bei einer Temperatur im Bereich von 50°C bis 70°C unter konstantem Rühren während eines Zeitraums von 4 bis 6 Stunden durchgeführt wird.

6. Verbessertes Verfahren nach den Ansprüchen 1 bis 5, wobei die während des Rückflussschritts zugegebene wässrige Glycinlösung im Konzentrationsbereich von 0,5% bis 5 Gew.% liegt.

7. Verbessertes Verfahren nach den Ansprüchen 1 bis 6, wobei die für die Dehydratisierung des Gels verwendete Mikrowellenenergie in der Größenordnung von 0,5 bis 1,5 kW liegt und die Frequenz 2,45 GHz ist.

8. Verbessertes Verfahren nach den Ansprüchen 1 bis 7, wobei eine Ofentrocknung des Mikrowellen-getrockneten Gels, falls erforderlich, bei einer Temperatur zwischen 100°C und 120°C für 14 bis 18 Stunden durchgeführt wird.

9. Verbessertes Verfahren nach den Ansprüchen 1 bis 8, wobei die Calcinierung des getrockneten Gels bei einer Temperatur zwischen 900°C und 1000°C für 1 bis 2 Stunden durchgeführt wird.

## Revendications

1. Procédé amélioré pour la fabrication d'une poudre céramique de manganite de lanthane dopé au strontium (poudre de LSM), La₁₋ₓSrₓMnO₃ (0 < x ≤ 0,5), convenant aux applications des piles à combustible à oxydes solides (SOFC), qui comprend la préparation d'un sol par dissolution d'une quantité stoechiométrique de précurseurs oxyde de lanthane (La₂O₃), carbonate de strontium (SrCO₃) et tétrahydrate d'acétate de manganèse (Mn(CH₃COO)₂·4H₂O) dans de l'eau bidistillée, le chauffage à reflux dudit sol en présence d'une solution aqueuse de glycine en tant que catalyseur, pour obtenir un produit sous forme de gel ; **caractérisé en ce que** le gel résultant est soumis à une déshydratation par micro-ondes dans un four à micro-ondes pendant une durée comprise entre 1 et 5 heures, puis le gel déshydraté est encore séché, si nécessaire, dans un four de séchage ; le concassage et le broyage du gel séché, suivi par une calcination et un broyage du produit sous forme de gel calciné, pour obtenir une poudre fine de manganite de lanthane dopé au strontium (poudre de LSM).

2. Procédé amélioré selon la revendication 1, dans lequel les précurseurs ajoutés à l'eau bidistillée sont dans un rapport stoechiométrique quelconque pour obtenir La₁₋ₓSrₓMnO₃, de sorte que x se situe dans l'intervalle suivant : 0 < x ≤ 0,5.

3. Procédé amélioré selon la revendication 1-2 dans lequel les précurseurs utilisés pour préparer un sol aqueux peuvent également être tels que (i) des sels de nitrate de La, Sr et Mn et (ii) La(OH)₃, SrCO₃ et MnCO₃.

4. Procédé amélioré selon les revendications 1-3 dans lequel l'ajout de précurseurs à l'eau bidistillée est effectuée à une température comprise entre 30 °C et 50 °C sous agitation constante pendant une durée comprise entre 45 et 75 minutes.

5. Procédé amélioré selon les revendications 1-4 dans lequel le chauffage à reflux du sol est effectué par ajout de 16 à 24 ml de solution aqueuse de glycine, pour 1000 g de matières premières, au sol à une température comprise entre 50 °C et 70 °C sous agitation constante pendant une durée de 4 à 6 heures.

6. Procédé amélioré selon les revendications 1 à 5 dans lequel la solution aqueuse de glycine ajoutée pendant l'étape de chauffage à reflux a une concentration comprise entre 0,5 % et 5 % en poids.

7. Procédé amélioré selon les revendications 1 à 6 dans lequel l'énergie des micro-ondes utilisée pour la déshydratation du gel est de l'ordre de 0,5 à 1,5 kW et la fréquence est de 2,45 GHz.

8. Procédé amélioré selon les revendications 1 à 7 dans lequel le séchage en four du gel déshydraté par micro-ondes, si nécessaire, est effectué à une température comprise entre 100 °C et 120 °C pendant 14 à 18 heures.

9. Procédé amélioré selon les revendications 1 à 8 dans lequel la calcination du gel séché est effectuée à une température comprise entre 900 °C et 1000 °C pendant 1 à 2 heures.
